# EUROPÄISCHE PATENTANMELDUNG

(11) **EP 1 679 017 A1**
(43) Veröffentlichungstag der Anmeldung: **12.07.2006**
(21) Anmeldenummer: 05405002.6
(22) Anmeldetag: 05.01.2005
(51) Int. Cl.: A46B 1/00, B29C 47/12

(54) **Verfahren zum Herstellen eines Reinigungsgeräts**

(71) Anmelder: Curaden International AG, 6010 Kriens (CH)
(72) Erfinder: Breitschmid, Ueli, 6045 Meggen (CH)
(74) Vertreter: Roshardt, Werner Alfred

(57) **Zusammenfassung**

Durch ein Verfahren zur Herstellung einer Bürste (2), insbesondere einer Interdentalbürste wird mittels eines Extrusionsverfahren mindestens ein Kernstrang (12) mit mindestens einer angeformten Lamelle extrudiert, wobei mindestens eine Lamelle nachträglich in Borstenelemente (20, 21, 22, etc) zerteilt wird. Die Interdentalbürste kann auch in einem intermittierenden Strangextrusionsververfahren erzeugt werden, indem mindestens ein Kernstrang mit mindestens einer angeformten Borstenreihe extrudiert wird. Die durch obige Verfahren hergestellte Bürste wird in einem weiteren Verfahrensschritt verdreht bzw. verdrillt, so dass die Borsten in Längsrichtung der Bürste schraubenförmig angeordnet sind.

## Beschreibung

### Technisches Gebiet

Die Erfindung betrifft ein Verfahren zur Herstellung eines Reinigungsgeräts mit mindestens einem Kernstrang und mit von diesem abstehenden Reinigungselementen, insbesondere einer Interdentalbürste. Ferner bezieht sich die Erfindung auf ein nach diesem Verfahren hergestelltes Reinigungsgerät, insbesondere eine Interdentalbürste.

### Stand der Technik

Interdentalbürsten sind feine Bürsten zum Reinigen der Zahnzwischenräume. Konventionell werden sie dadurch hergestellt, dass Kunststoffborsten zwischen zwei beschichtete Metalldrähte gebracht werden, wonach die beiden Metalldrähte miteinander verdrillt werden, so dass die Borsten eingeklemmt werden. Am überstehenden Ende der verdrillten Drähte kann ein Kunststoffteil angeformt sein, welches in einem Halter auswechselbar eingesetzt werden kann (WO 86/02532, Curaden AG). Neben manuell geführten Interdentalbürsten gibt es auch motorisch betriebene (US 6,253,404 B1, Braun GmbH).

Es ist auch schon vorgeschlagen worden, die Interdentalbürsten integral aus Kunststoff herzustellen. Aus der JP 61-37153 (Kowa-Sogo Kenkyusho) ist z. B. eine Art Zahnstocher mit angeformten Borsten bekannt, welcher durch ein Spritzgussverfahren hergestellt wird. Auch die JP 3-22723 (Jota Denkirozai) beschreibt eine Interdentalbürste, die durch eine zweiteilige Spritzgussform hergestellt werden kann. Diese Technik wurde in der EP 1 147 750 A1 (Sunstar) dahingehend weiterentwickelt, dass die Borsten sternförmig, d. h. mit Verzeigungen ausgebildet sind.

Nachteilig bei den bekannten Spritzgussverfahren ist die aufwändige Produktion. Das Herstellen der Formen ist sehr kostenintensiv und die feingliedrigen Formen für die Borsten sind heikel.

### Darstellung der Erfindung

Aufgabe der Erfindung ist es, ein dem eingangs genannten technischen Gebiet zugehörendes Verfahren zum Herstellen von Reinigungsgeräten, insbesondere von Interdentalbürsten anzugeben, welches technisch effizient und kostengünstig ist.

Die Lösung der Aufgabe ist durch die Merkmale des Anspruchs 1 definiert.

Gemäss der Erfindung wird das Reinigungsgerät bzw. die Bürste (insbesondere der Teil mit den Reinigungselementen bzw. Borsten) durch ein Strangextrusionsverfahren produziert.

Die Borsten bzw. Reinigungselemente werden dabei aus dem gleichen Material wie der Kernstrang (welcher den Stiel bildet) und praktisch im gleichen Prozess hergestellt. Das Strangextrusionsverfahren ermöglicht es, die Reinigungsgeräte bzw. Bürsten in einem kontinuierlich laufenden Prozess herzustellen. Dies ist ein wesentlicher Vorteil gegenüber einem Spritzgussverfahren, bei welchem eine Form (deren Herstellung zudem einen beträchtlichen Aufwand bedeutet) immer wieder neu präpariert, ausgespritzt und entleert werden muss.

Die Borsten können dadurch erzeugt werden, dass zunächst eine durchgehende Lamelle extrudiert wird und dass diese Lamelle nachträglich (z. B. im erkalteten Zustand) in Abschnitte bzw. in Borsten zerteilt wird. Die Länge der Lamelle kann z. B. auf die gewünschte Länge des Borstenkopfes der Bürste beschränkt werden, ohne den Extrusionsprozess zu beenden. Dazu wird der Bereich der Extrusionsöffnung, welcher die Lamelle generiert, periodisch geschlossen. Sinnvollerweise erfolgt auch das Zerteilen der Lamellen in einzelne Borsten mit Mitteln, die für einen kontinuierlichen Prozess geeignet sind. Anstelle von borstenartigen Reinigungselementen können auch lamellenartige Reinigungselemente gebildet werden.

Unter einem Kernstrang soll hier derjenige Teil des Extrudates verstanden werden, welcher den Stiel oder zumindest einen Teil des Stiels der Bürste bildet ("Borstenträger"). Er ist in der Regel dicker als die an ihm angeformten Borsten bzw. als die Lamellen, welche in Borsten unterteilt werden. Der Kernstrang kann durchgehend aus dem Kunststoffmaterial bestehen, mit welchem der Extruder befüllt wird. Er kann aber auch zusätzlich eine Seele haben (z. B. einen Metalldraht oder ein Kunststofffilament bzw. mehrere solche Drähte bzw. Filamente).

Die Extrusionsdüse besitzt eine "zentrale" Öffnung, durch welche der Kernstrang extrudiert wird. Von dieser Öffnung führt zumindest eine schlitzförmige Öffnung weg, durch welche die Kunststofflamelle zusammen mit (gleichzeitig mit) dem Kernstrang extrudiert wird. Die schlitzförmige Öffnung ist also mit der "zentralen" Öffnung verbunden.

Vorzugsweise wird der Kernstrang mit den daran angeformten Borstenelementen in Längsrichtung schraubenförmig verdreht, so dass die am Kernstrang angeformten Borstenanordnungen schraubenförmig und nicht auf einer Geraden verlaufen. Über einen bestimmten Längenabschnitt der Bürste betrachtet, ergibt sich so eine regelmässige Verteilung der Borsten über den Umfang. Im Prinzip wird dadurch die an sich bewährte Borstenanordnung der konventionellen Interdentalbürsten nachgebildet (bei welcher Kunststoffborsten zwischen zwei verdrillten Drähten fixiert sind).

Über den Grad der Verdrillung, d. h. die Steigung der beim Verdrillen bzw. Verdrehen entstehenden Schraubenlinie, lässt sich die Anzahl der Borsten je Winkelsegment einstellen. Vorzugsweise wird der Kernstrang mit den Borsten soweit verdrillt, dass bei einer rein linear ausgeführten Bewegung der Interdentalbürste im Wesentlichen kein Bereich zwischen zwei Borsten existiert, der nicht von einer Borste überstrichen wird.

Wird die Interdentalbürste nicht manuell betätigt, sondern mit einem Motor betrieben (wie z. B. aus der US 6,253,404 B1, Braun GmbH bekannt), dann können die Borstenanordnungen auch linear sein. Das Verdrehen des Kernstrangs ist also nicht zwingend.

Die schraubenlinienförmige Anordnung der Borsten kann auch dadurch erzeugt werden, dass zunächst zwei Kernstränge mit mindestens je einer angeformten Borstenanordnung hergestellt werden (wie oben dargestellt) und dass dann die beiden Kernstränge miteinander verdrillt werden. Beim Verdrillen wird darauf geachtet, dass die Borstenanordnungen in diametral entgegengesetzter Richtung radial nach aussen stehen. Vorzugsweise werden pro Kernstrang zwei lineare Borstenanordnungen vorbereitet, welche ungefähr im 90° Winkel zueinander stehen. Beim Verdrillen kann auf diese Weise eine Bürste erzeugt werden, bei welcher vier schraubenlinienförmig umlaufende Borstenreihen vorhanden sind, welche alle in einer 90°-Position relativ zu den winkelmässig benachbarten Borstenreihen stehen.

Es können ein, zwei, drei, vier oder mehr Lamellen am Kernstrang extrudiert werden, aus welchen ein, zwei, drei bzw. vier oder mehr Borstenreihen geschnitten werden. Vorzugsweise werden die (dünnen) Lamellenextrusionsschlitze in gleichen winkelmässigen Abständen über den Umfang verteilt (z. B. zwei in 180° oder oder vier in 90° Stellung zueinander).

Gemäss einer weiteren Ausführungsform ist vorgesehen, dass in einem ersten Verfahrensschritt bei der Extrusion des Kernstranges wenigstens eine Seele aus Metall oder Kunststoff durch die Extrusionsdüse geführt und in den zu extrudierenden Kunststoff eingebettet wird. Der Seele kommt hierbei eine stabilisierende Funktion zu. Sie kann insbesondere den Prozessschritt des Verdrehens des Kernstrangs unterstützen, indem sichergestellt ist, dass die Schraubenform regelmässig wird und kein Materialbruch auftritt. Die Seele kann im Querschnitt kreisförmig oder auch streifenförmig sein. Insbesonders wenn nur ein Draht (bzw. nur ein einziges Kunststofffilament) als Seele vorgesehen ist, ist eine nicht rotationssymmetrischer (z. B. ovaler oder streifenförmiger) Querschnitt von Vorteil, weil dieser die Verdrehung besser in eine Schraubenlinie der Borstenreihen umsetzen kann.

Die Extrusionsdüse weist dabei eine Öffnung der Gestalt auf, dass ihr Kerndurchmesser grösser als der Durchmesser der einzubettenden Seele ist, und die so gross ist, dass die Seele, die durch diese Öffnung geführt wird, während der Extrusion vollständig in den zu extrudierenden Kunststoff eingebettet wird.

In einem zweiten Verfahrensschritt wird die durch den Extrusionsprozess an den Kernstrang angeformte Lamelle in Borstenelemente zerteilt. Das Zerteilen der Lamelle in einzelne Borsten kann vorteilhaft durch rotierende Walzenmesser erfolgen. Der Kernstrang wird dabei so durch gegenläufig rotierende Schneidwalzen gezogen, dass die Lamelle von den rotierenden Messern der Walzen erfasst und zerteilt wird. Die Rotationsachse der Walzen steht quer zur Längsachse des Kernstrangs (Förderrichtung des Extrusionsprozesses).

In einer anderen Ausführung wird die Lamelle durch ein rotierendes Messer dessen Schneiden propellerartig angeordnet sind, zerteilt. Die Rotationsachse eines solchen Messers ist im Wesentlichen parallel zur Längsachse des Kernstrangs. In einer weiteren Ausführung kann die Lamelle durch ein pendelndes Messer in Borsten zerteilt werden, wobei die Drehachse der Pendelbewegung parallel zur Längsachse des Kernstrangs ausgerichtet ist. In einer wieder anderen Ausführung wird die Lamelle durch einen Draht in Borsten zerteilt, indem der Draht mit hoher Geschwindigkeit und bei noch weichem Kunststoff schraubenförmig um den Kernstrang mit der angeformten Lamelle gewickelt wird.

In einem nachfolgenden dritten Verfahrensschritt kann der Kernstrang gewünschtenfalls verdreht werden. Vorteilhafterweise werden die drei Verfahrensschritte unmittelbar nacheinander, d. h. in einem durchgehenden Prozessablauf durchgeführt. Das Verdrehen des extrudierten Stranges um seine Längsachse erzeugt nicht nur schraubenlinienförmige Borstenanordnungen, sondern kann auch die Stabilität der Bürste verbessern. Dabei wird an einer ersten Stelle des Produktionsverfahrens ein Führungselement vorgesehen, welches den extrudierten Strang orientierungsmässig fixiert, und an einer zweiten (stromabwärts) gelegenen Stelle des Produktionsverfahrens eine Verdrehvorrichtung vorgesehen, welche den extrudierten Strang um seine Längsachse schraubenlinienförmig verdreht. Unter Umständen kann es vorteilhaft sein, den verdrehten Kernstrang kurz zu erwärmen, um die torsionsbedingte Materialspannung zu reduzieren.

Anschliessend wird der Strang auf Bürstenlänge zugeschnitten und konfektioniert.

Alternativ kann auch erst der Strang auf Bürstenlänge geschnitten werden und anschliessend die einzelnen Bürsten schraubenlinienförmig verdreht werden. Letzteres ist jedoch mit einem gewissen Mehraufwand verbunden, da die Bürsten einzeln nochmals aufgenommen werden müssen, um sie zu verdrillen.

In der Regel wird es genügen zwei Borstenreihen zu erzeugen, welche vom Kernstrang diametral entgegengesetzt radial nach aussen laufen. Die beiden Borstenreihen lassen sich aber auch in anderer Geometrie (mit beliebig vorgebbarem Winkel) herstellen. Durch geeignet ausgebildete Extrusionsdüsen können anwendungsspezifische Bürsten z. B. mit asymmetrisch verteilten Borstenreihen erzeugt werden.

Die Borsten bzw. Reinigungsemelente lassen sich auch bei der Extrusion herstellen, indem die einzelnen Borsten durch ein unterbrochenes Extrudieren erzeugt werden. Das zeitweise Aussetzen oder Verhindern der Extrusion im Bereich der Lamellenöffnung der Extrusionsdüse, lässt Bereiche mit und ohne Borsten, also eine Borstenreihe entstehen. Über die zeitliche Steuerung dieser Extrusionsunterbrechung lässt sich somit eine beliebige Abfolge von Borsten erzeugen, d. h. der Borstenzwischenraum und die "axiale" Breite der einzelnen Borsten (d. h. die Ausdehnung des Borstenquerschnitts in Richtung parallel zum Kernstrang) lässt sich mit diesem Verfahren einstellen. Das (separate nachträgliche) Zerteilen der Lamellen in Borsten entfällt. Ein weiterer Vorteil dieses Verfahrens besteht darin, dass durch das intermittierende Extrudieren in periodischen Abständen borstenfreie Abschnitte erzeugt werden können. Diese Abschnitte bilden den Teil der Bürste, der später zur Befestigung am Griffstück dient. Somit kann durch Extrusion und ohne einen weiteren zusätzlichen Verfahrensschritt die Borstenreihe und der zur Befestigung dienende Teil der Bürste in einem einzigen Verfahrensschritt hergestellt werden. Die borstenfreien Abschnitte können natürlich auch dadurch erzeugt werden, dass die Lamellen bzw. Borsten bzw. Reinigungselemente bereichsweise nachträglich entfernt (abgeschnitten) werden.

Anstelle einer periodischen und gleichmässigen Abfolge von Borsten lassen sich auch Borstenreihen mit variablen Borstenabständen extrudieren, um z. B. Bereiche hoher oder niedriger Dichte von Borsten zu generieren. Dies erweist sich als vorteilhaft, wenn spezifische Anforderungen beim Reinigen an die Bürste gestellt werden. So kann der verwinkelten Geometrie von Zahnzwischenräumen unter Umständen besser Rechnung getragen werden. Ebenso lässt sich mit diesem Extrusionsverfahren die "axiale" Breite der Borste (d. h. die Ausdehnung des Borstenquerschnitts in Richtung parallel zum Kernstrang) an die jeweiligen Erfordernisse anpassen. Mit streifenförmigen Borsten kann die Steifigkeit der Borste in Längsrichtung des Kernstrangs erhöht werden. Mit in Kernstrang-Längsrichtung ausgedehnten Borsten (bzw. Lamellen) kann Reinigungseffekt ähnlich wie bei Zahnseide erreicht werden.

Um Borstenelemente durch Extrusion herzustellen, sind Verschlussvorrichtungen vorgesehen, welche die Extrusionsdüse im Bereich der Lamellenöffnung verschliessen. Dadurch kann das Extrudieren zeitweilig unterbrochen werden. Vorzugsweise wird eine Spaltblende so weit in eine Spaltöffnung geschoben, welche sich im Bereich der Lamellendüsenöffnung befindet, bis durch die Extrusionsdüse nur noch der eigentliche Kernstrang extrudiert werden kann. Nach einem bestimmten Zeitintervall wird die Spaltblende aus der Spaltöffnung wieder herausgezogen und ein definiert langer borstenfreier Abschnitt ist extrudiert worden. Weiterhin geeignet als Verschlussvorrichtungen lassen sich z. B. Irisblenden (rotationssymmetrisch funktionierende Blenden) oder auch Revolverblenden (exzentrisch gelagerte Verschlussblenden, welche in die Extrusionsöffnung eingeschwenkt werden) verwenden. Prinzipiell sind aber auch anders beschaffene Verschlusselemente einsetzbar, mit deren Hilfe sich die Düse verschliessen lässt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen:
- Fig. 1: Eine schematische Darstellung eines Griffs mit einer Interdentalbürste, bei welcher der Bürstenkopf an seinem Ende im Griffstück festgeklemmt wird.
- Fig. 2: Eine schematische Darstellung des Bürstenkopfes mit innenliegenden verdrillten Drahtkern und Kunststoffummantelung.
- Fig. 3: Eine schematische Darstellung einer Ausführungsform der Bürste mit gerader Borstenreihe und aufgestecktem Kupplungsteil.
- Fig. 4: Eine schematische Darstellung einer Kunststoffextrusionsanlage zur Durchführung des erfindungsgemässen Verfahrens.
- Fig. 5: Eine schematische Darstellung einer Extrusionsdüse mit vier schlitzförmigen radialen Öffnungen.
- Fig. 6a, b: Eine schematische perspektivische Ansicht des Extrudatstrangs vor und nach dem Schneiden der Lamellen.
- Fig. 7: Eine schematische Darstellung einer Vorrichtung zum Verdrehen des Extrudatstrangs.
- Fig. 8: Eine schematische Darstellung einer Ausführungsform, bei welcher zwei separate Extrudatstränge hergestellt werden, welche dann zu einem einzigen Strang verdrillt werden.
- Fig. 9: Eine schematische Darstellung einer Extrusionsdüse mit Schiebeverschlüssen.
- Fig. 10: Eine schematische Darstellung einer Schneidvorrichtung zum Erzeugen der Borsten.

In den Zeichnungen sind gleiche Teile mit gleichen Bezugszeichen versehen.

### Wege zur Ausführung der Erfindung

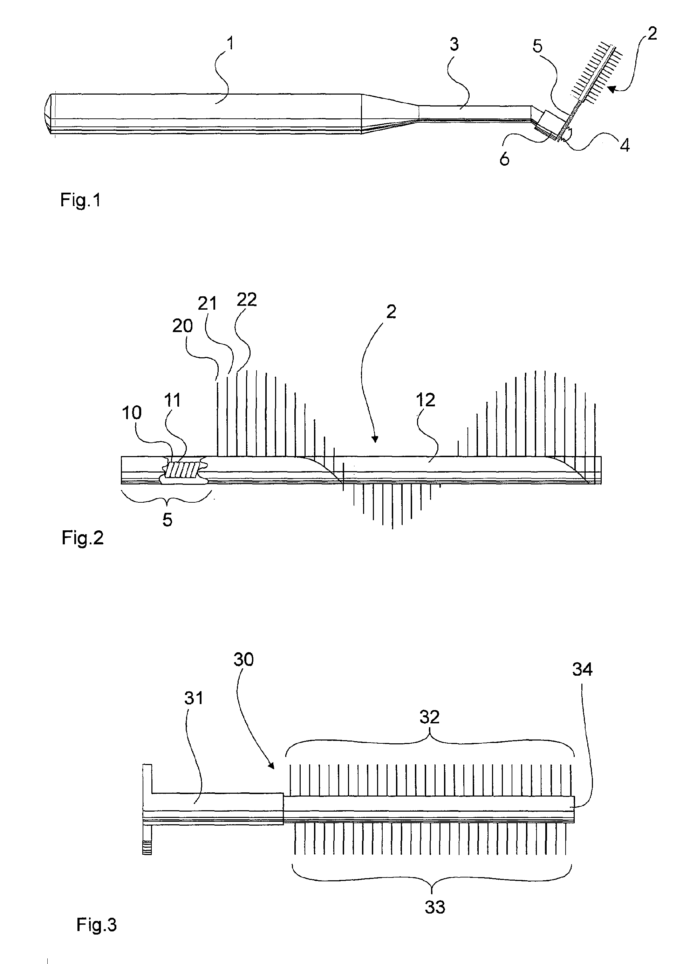

**Figur 1** zeigt ein an sich bekanntes Griffstück **1** mit einer Interdentalbürste **2.** Das Griffstück 1 verjüngt sich hin zu einem stielartigen Abschnitt **3,** welcher zum Ende hin leicht abgewinkelt ist. Der abgewinkelte Bereich des Abschnitts **3** ist z. B. mit einem Loch (nicht dargestellt) versehen ist und hat ein Aussengewinde **4.** Die Interdentalbürste **2** kann mit ihrem Befestigungsabschnitt **5** durch das Loch des abgewinkelten Abschnittes **3** gesteckt und mit einer Überwurfmutter **6** (oder einem anderen Fixierelement) am Griffstück 1 festgeklemmt werden.

**Figur 2** zeigt schematisch eine besonders bevorzugte Ausführung der erfindungsgemässen Interdentalbürste **2.** Sie hat einen Kernstrang **12,** an welchem Borsten **20, 21, 22** etc. integral (einstückig) angeformt sind. Der Kernstrang **12** ist z. B. etwa 20 mm lang und enthält als Seele zwei Drähte **10, 11.** Die Drähte **10, 11** unterstützen bzw. erzeugen die Verdrillung des Kernstrangs **12.** Die verdrillten Drähte sind vollständig von einem Kunststoffmantel umgeben, aus welchem radial Borsten **20, 21, 22** etc. entspringen. An einem Ende der Interdentalbürste sind die Borsten über eine Länge von z. B. 10 mm nicht vorhanden. Dieser Teil der Bürste bildet einen Befestigungsabschnitt **5** und dient zur Befestigung am Griffstück **1.**

Die Borsten **20, 21, 22** etc. bilden eine Borstenreihe, die schraubenlinienförmig um den Kernstrang **12** herumläuft. Der Klarheit der Darstellung willen ist in **Figur 2** nur eine einzige Borstenreihe gezeigt. In der Praxis werden aber mindestens zwei, vorzugsweise sogar vier Borstenreihen vorgesehen sein. Diese schraubenlinienförmige Anordnung ermöglicht eine effektive Reinigung der Zahnzwischenräume, auch wenn die Interdentalbürste nicht rotierend bewegt wird.

**Figur 3** zeigt eine andere Ausgestaltung der Interdentalbürste **30.** Bei dieser ist der Befestigungsabschnitt mit einem stabilen Kunststoffformteil **31** (mit einem z. B. T-förmigen Ende) versehen, wie er als solcher beispielsweise aus der WO 86/02532 (Curaden AG) bekannt ist. Das T-förmige Ende kann mit der Überwurfmutter **6** am Griffstück **1** derart fixiert werden, dass ein nicht beabsichtigtes Herausziehen der Interdentalbürste **2** aus dem Griffstück **1** während des Gebrauchs verhindert wird.

Die Interdentalbürste **30** hat im Unterschied zur Ausführungsform der **Figur 1** keine Seele. Die Borsten sind in zwei linearen Borstenreihen **32, 33** entlang des Kernstrangs **34** angeordnet. Die Borsten sind in der gezeigten Ausführungsform alle gleich lang. Eine solche Borstenanordnung eignet sich z. B. für motorbetriebene Interdentalbürsten.

Die Länge der Borsten ist typischerweise zwischen 0.5 und 1 mm lang, damit sie problemlos in enge Zahnzwischenräume eingeführt werden können und eine gute Reinigungswirkung haben. Bei zu langen Borsten kann unter Umständen die Eigenstabiliät und Belastbarkeit der Borsten zu gering sein.

Die Borstendichte in Längsrichtung des Kernstrangs betrachtet, soll so hoch wie möglich sein. Typischerweise wird eine Borstendichte von mindestens 5 (z. B. 8 - 10) Borsten je Millimeter angestrebt. Es können aber durchaus auch weniger Borsten sein, abhängig vom Durchmesser der jeweiligen Borste. In einer bevorzugten Ausführung besitzen die einzelnen Borsten eine Stangenform und haben einen Durchmesser von einem Bruchteil eines Millimeters (z. B. 1/10 mm). Damit ist die Borste widerstandsfähig genug, um eine reinigende Wirkung zu erzielen und trotzdem flexibel genug, um keine Schädigung im Zahnbereich hervorzurufen.

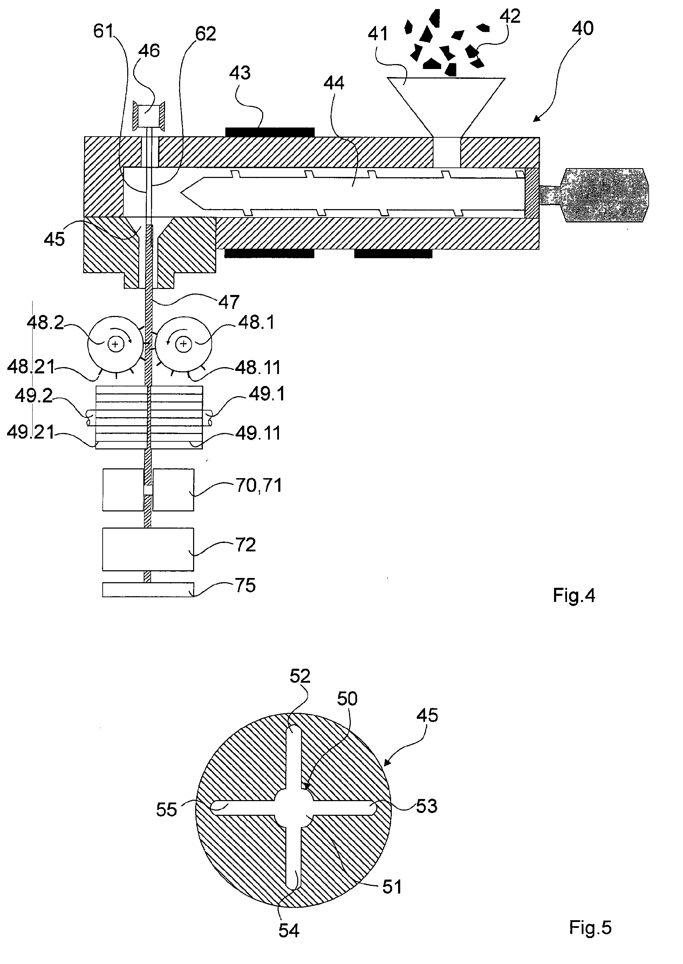

In **Figur 4** ist eine Strangextrusionsvorrichtung dargestellt, mit der die oben beschriebenen Interdentalbürsten bzw. der Bürstenköpfe hergestellt werden können. Die benötigten Ausgangsmaterialien **42** werden in an sich bekannter Weise über einen Einfülltrichter **41** dem Extruder **40** zugeführt und dort erwärmt (Heizelement **43).** Die Ausgangsmaterialien können z. B. Polyethylen (PE), thermoplastische Polymere wie Polypropylen (PP), Polyethylenterephthalat (PET) oder Polyamin (PA) sein. Denkbar sind auch Gummi oder Kautschuk. Mit einer Extruderschnecke **44** wird das Ausgangsmaterial nach dem Funktionsprinzip eines Fleischwolfes vermischt, homogenisiert und verdichtet und zur Extrusionsdüse **45** transportiert. Die so präparierte plastische Extrudiermasse wird durch die Extrusionsdüse **45** zu einem stabförmigen Extrudatstrang **47** mit Endloslamellen extrudiert. Gemäss einer besonders bevorzugten Ausführungsform werden beim Extrudieren gleichzeitig zwei Drähte **61, 62,** die die Seele des Kernstranges der Interdentalbürste bilden, von der Drahtrolle **46** abgewickelt und durch die Extrudierdüse **45** geführt.

**Figur 5** zeigt die Extrudierdüse **45** im Achsenquerschnitt. Die Extrusionsöffnung **50** hat einen zentralen Durchgang **51**, an welchen sich vier radial nach aussen laufende, schlitzförmig ausgeprägte Durchgänge **52, 53, 54, 55** anschliessen. Der zentrale Durchgang **51** ist z. B. kreisförmig, die schlitzförmigen Durchgänge **52, 53, 54, 55** haben eine Breite die geringer ist als der Durchmesser des zentralen Durchgangs **51.** Im vorliegenden Beispiel haben die schlitzförmigen Durchgänge **52, 53, 54, 55,** über ihre gesamte Länge eine im Wesentlichen konstante Breite. Ihre Form bestimmt den Querschnitt der zu extrudierenden Lamellen, aus welchen die Borsten bzw. Reinigungselemente gebildet werden.

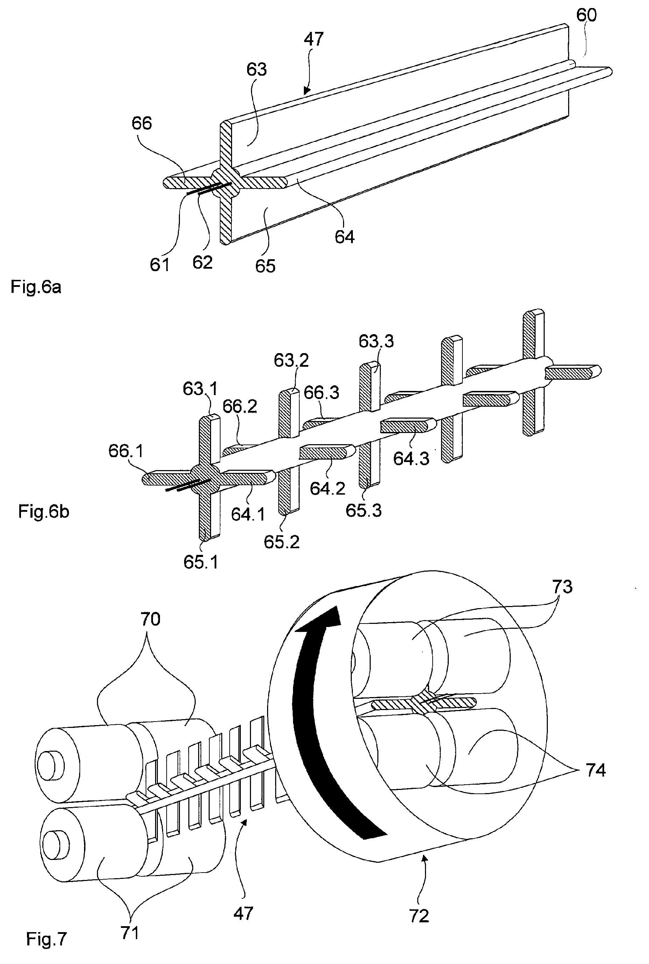

**Figur 6a** zeigt eine schematische perspektivische Ansicht des Extrudatstrangs **47.** Es sind der Kernstrang **60** mit den beiden Drähten **61, 62** und den vier angeformten Endloslamellen **63, 64, 65, 66** dargestellt.

Als Nächstes sind die Endloslamellen **63, 64, 65, 66** in einzelne Borsten zu zerteilen. Wie in **Figur 4** ersichtlich ist, können zu diesem Zweck Schneidwalzen **48.1, 48.2** und **49.1, 49.2** verwendet werden. Die Schneidwalzen haben umfangsseitig angebrachte Messer **48.11, 48.21, 49.11, 49.21.** Die beiden Schneidwalzen **48.1, 48.2** dienen zum Zerteilen der beiden Endloslamellen **63, 65.** Sie sind so angeordnet und ausgebildet, dass der Kernstrang **60** und die beiden Endloslamellen **64, 66** ungehindert zwischendurch laufen können, während mit den Messern **48.11, 48.21** die Endloslamellen **63, 65** eingeschnitten werden. Das zweite Paar der Schneidwalzen **49.1, 49.2** erzeugt die Einschnitte an den anderen beiden Endloslamellen **64, 66.** Die Rotationsachsen der Schneidwalzen **49.1, 49.2** stehen senkrecht zu den Rotationsachsen der Schneidwalzen **48.1, 48.2.**

Die Endloslamellen **63, 64, 65, 66** werden also nach der Extrusionsdüse in regelmässigen Abständen eingeschnitten, so dass eine Reihe von Borsten **63.1, 63.2, 63.3** bzw. **64.1, 64.2, 64.3 bzw. 65.1, 65.2, 65.3 bzw. 66.1, 66.2, 66.3** entsteht, wie in **Figur 6b** gezeigt. (Die Abstände zwischen den Borsten sind in Figur 6b stark übertrieben dargestellt. Ziel ist es, diese Abstände so klein wie möglich zu halten, z. B. ähnlich wie die Zähne eines Kamms).

Der Kernstrang **60** wird schliesslich schraubenförmig verdreht, so dass die Borstenreihen schraubenlinienartig entlang der Mantelseite des Kernstrangs **60** verlaufen (wie in **Figur 2** angedeutet).

**Figur 7** zeigt eine schematische Darstellung einer Vorrichtung, welche den Extrudatstrang **47** kontinuierlich verdrehen kann. Nachdem die Endloslamellen **63, 64, 65, 66** in Borsten zerteilt sind, wird der Extrudatstrang **47** zwischen zwei Rückhalterollen **70, 71** hindurch geführt. Diese sorgen dafür, dass der Extrudatstrang **47** eine vorgegebene Orientierung bezüglich seiner Längsachse beibehält. In einem Abstand zu den Rückhalterollen **70, 71** ist eine Verdrehvorrichtung **72** vorgesehen, welche den Extrudatstrang **47** um seine Längsachse verdreht. Die Verdrehvorrichtung **72** kann durch zwei Halterollen **73, 74** realisiert sein, welche als Paar um die Längsachse des Extrudatstrangs rotiert werden. Die Halterollen **73, 74** halten den Extrudatstrang (während des Förderns in Längsrichtung) orientierungsmässig fest und zwingen ihm deshalb beim Rotieren eine Torsion auf. Um erforderlichenfalls sicherzustellen, dass die Verdrehung nach der Verdrehvorrichtung **72** sich nicht wieder lösen kann, kann im Bereich zwischen den Rückhalterollen **70, 71** und den Halterollen **73, 74** eine Materialfixierung durch Erwärmung, durch Ultraviolettstrahlung oder durch chemische Behandlung des Kunststoffs erfolgen.

In einem nächsten Verfahrensschritt wird der Extrudatstrang **47** mit einer Schneidvorrichtung **75** auf eine gewünschte Stücklänge zu Interdentalbürsten geschnitten.

Falls die Interdentalbürsten einen borstenfreien Befestigungsabschnitt haben soll, können bereits nach dem Extrudieren die Endloslamellen **63, 64, 65, 66** abschnittsweise entfernt werden. Es kann z. B. in den Schneidwalzen **48.1, 48.2, 49.1, 49.2** ein Schnittprofil vorgesehen sein, welches in regelmässigen Abständen Lücken in die Endloslamellen **63, 64, 65, 66** schneidet entsprechend der benötigten Länge des Befestigungsabschnitts. Eine andere Möglichkeit besteht darin, dass vor der Schneidvorrichtung abschnittsweise die Borsten entfernt werden (z. B. mit einem Laser).

Der Extrudatstrang **47** kann bei Bedarf auch auf eine Spule aufgewickelt werden für den Versand, so dass die Konfektionierung der Interdentalbürste an einem anderen Ort stattfindet.

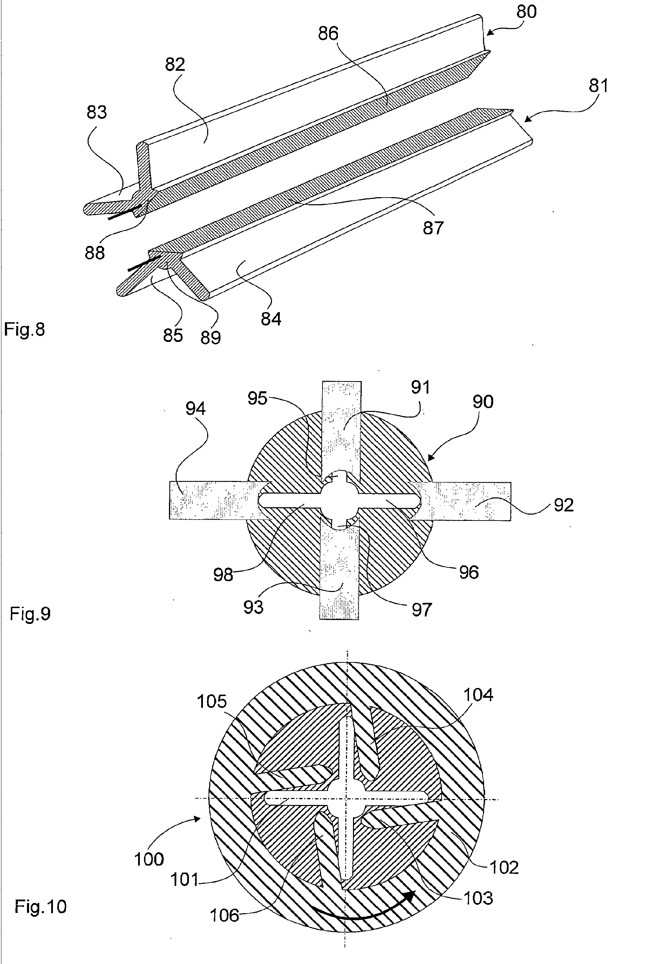

**Figur 8** zeigt eine Ausführungsform, bei welcher zunächst zwei separate Extrudatstränge **80, 81** hergestellt werden, welche dann zu einem einzigen Strang verdrillt werden. Jeder der beiden Extrudatstränge **80, 81** hat einen Kernstrang **88, 89** mit z. B. zwei Endloslamellen **82, 83** bzw. **84, 85,** welche in einem Winkel von etwa 90° zueinander stehen. Werden die beiden Extrudatstränge **80, 81** zusammengefügt, ergibt sich ein Gesamtbild, bei welchem vom verdrillten Kernstrang vier Endloslamellen **82, 83, 84, 85** in regelmässiger, sternförmiger Anordnung abstehen. Um sicher zu stellen, dass sich die Extrudatstränge in definierter (symmetrischer) Lage zusammenfügen lassen, haben beide Kernstränge **88, 89** eine abgeflachte Seite **86, 87.**

**Figur 9** zeigt eine Extrusionsdüse **90,** welche mit Schiebeverschlüssen **91, 92, 93, 94** versehen ist. Die Schiebeverschlüsse **91, 92, 93, 94** können elektronisch gesteuert aus- und eingefahren werden. Im eingefahrenen Zustand (vgl. Schiebeverschlüsse **91, 93**) werden die schlitzförmigen Durchgänge **95, 97** verdeckt, so dass zwar der Kernstrang, nicht aber die Lamelle extrudiert werden kann. Im ausgefahrenen Zustand (Schiebeverschlüsse **92, 94)** bleiben die schlitzförmigen Durchgänge **96, 98** frei und die Lamellen werden mit extrudiert. Im Normalfall werden die Schiebeverschlüsse **91, 92, 93, 94** synchron betätigt, d. h. alle vier werden gleichzeitig ein- und ausgefahren. Durch dieses periodische Verschliessen der Durchgänge **95, 96, 97, 98** werden die Borsten gebildet. Der Kunststoff wird quasi intermittierend extrudiert.

Die erwähnten Schiebeverschlüsse **91, 92, 93, 94** können natürlich auch dazu verwendet werden, borstenfreie Befestigungsabschnitte zu bilden.

Anstelle der radial ein- und ausfahrenden Schiebeverschlüsse, können auch in Umfangsrichtung verschiebbare Schiebeverschlüsse vorgesehen sein. Es kann auch ein Rotationsverschluss eingesetzt werden. Ein solcher besteht im Wesentlichen aus einer Scheibe, die unmittelbar ausgangsseitig der Extrusionsdüse angeordnet ist und im Prinzip die gleichen Öffnungen hat (also ein zentraler Durchgang und z. B. vier schlitzförmige, radial weglaufende Durchgänge). Die Scheibe wird koaxial zur Extrusionsdüse angeordnet und ist drehbar um die zentrale Öffnung gelagert. Durch Hin- und Herdrehen (oder durch kontinuierliches Rotieren) des Rotationsverschlusses werden die Öffnungen der Extrusionsdüse periodisch geöffnet und geschlossen.

Der Rotationsverschluss kann auch in der Art eines Rings ausgebildet sein, welcher einen Innendurchmesser entsprechend der durch die schlitzförmigen Düsenbereiche abgesteckten Kreisfläche hat und welcher vier zum Zentrum zeigende Finger bzw. Messer hat. Wird der Rotationsverschluss gedreht, durchtrennen die vier Messer bzw. Finger die aus den schlitzförmigen Öffnungen extrudierten Lamellen.

**Figur 10** zeigt eine Schneidvorrichtung **100,** welche zum Herstellen der Borsten dient und in einer ähnlichen Art wie der soeben beschriebene Rotationsverschluss ausgebildet ist. Es wird zunächst ein Extrudat, wie es in **Figur 6a** dargestellt ist, erzeugt und nachher durch die Schneidvorrichtung gezogen. Die Schneidvorrichtung hat einen feststehenden Führungsdurchgang **101,** welcher auf die Qurschnittsform des Extrudates angepasst ist. D. h der Führungsdurchgang **101** hat eine ähnliche Form wie die Extrusionsdüse **90** (zentraler Durchgang und vier radial weglaufende Schlitzöffnungen). Ausgangsseitig des Führungsdurchgangs **101** ist das Rotationsmesser **102** angeordnet. Es hat einen äusseren Ring **102** und einen inneren Freibereich, in welchen vier Schneidfinger **103, 104, 105, 106** im Wesentlichen radial hineinragen. Vorzugsweise sind die Schneidfinger **103, 104, 105, 106** leicht schräg zur Radialrichtung ausgerichtet, so dass die Lamellen des Extrudates von aussen nach innen eingeschnitten werden, wenn das Rotationsmesser **102** (in der mit Pfeil markierten Richtung) gedreht wird.

Um die beim Verdrillen von erkaltetem Material entstehende Spannung zu reduzieren, kann der Kernstrang nach bzw. während dem Verdrehen kurz erwärmt werden (z. B. durch Infrarotstrahlung).

Die Borsten brauchen nicht einen konstanten Querschnitt zu haben. Sie können sich zu ihrem äusseren Ende hin auch verjüngen. Die Form kann durch die Extrusionsöffnung fast frei vorgegeben werden. Auch die Borstendichte (in Längsrichtung) kann variiert werden. Es ist deshalb auch möglich speziell an bestimmte Zwecke angepasste, unregelmässige Borstenfelder zu erzeugen. Die Ausdehnung der Borstenquerschnitte in Kernstranglängsrichtung kann grösser sein als diejenige in Umfangsrichtung des Kernstrangs, d. h. die Borsten können blatt- oder bandförmig sein.

Es ist auch möglich, anstelle von feinen Borsten, feine Lamellen als Reinigungselemente vorzusehen wie aus der US 6,253,404 B1 (Braun GmbH) bekannt. Es können auch Lamellen und Borsten kombiniert werden.

Falls der Extrudatstrang eine Seele (z. B. zwei verdrillte Drähte) hat, kann der Kunststoffmantel im Bereich des Befestigungsabschnittes auch vollständig weggelassen oder entfernt werden. Eine derart freigelegte Seele kann dann in einen festen Kunststoffformteil eingebettet werden oder auch direkt zur Befestigung am Griffstück dienen.

Zusammenfassend ist festzustellen, dass durch die Erfindung ein vielseitiges und kontinuierlich betreibbares Verfahren zur Herstellung von Interdentalbürsten mit integral angeformten Borsten geschaffen worden ist.

## Patentansprüche

1. Verfahren zum Herstellen eines Reinigungsgeräts mit mindestens einem Kernstrang und mit von diesem abstehenden Reinigungselementen, insbesondere einer Interdentalbürste **(2), dadurch gekennzeichnet, dass** der mindestens eine Kernstrang **(12, 34, 60)** mit mindestens einer an diesem angeformten Lamelle **(63, 64, 65, 66; 82, 83, 84, 85)** durch ein Strangextrusionsverfahren extrudiert wird und dass die mindestens eine Lamelle **(63, 64, 65, 66; 82, 83, 84, 85)** nachträglich in Abschnitte bzw. in Borstenelemente **(63.1, 63.2, 63.3 64.1, 64.2, 64.3 65.1, 65.2, 65.3 66.1, 66.2, 66.3)** zerteilt wird.

2. Verfahren zum Herstellen eines Reinigungsgeräts mit mindestens einem Kernstrang und mit von diesem abstehenden Reinigungselementen, insbesondere einer Interdentalbürste (**2**), **dadurch gekennzeichnet, dass** der mindestens ein Kernstrang (**12, 34, 60**) mit mindestens einer an diesem angeformten Borstenreihe bzw. Lamellenabschnitt durch ein Strangextrusionsverfahren extrudiert wird, wobei die Borstenreihe bzw. der Lamellenabschnitt durch intermittierendes Extrudieren durch eine Lamellenextrusionsöffnung **(50; 95, 96, 97, 98)** hindurch erzeugt wird.

3. Verfahren nach Anspruch 1 oder 2, **dadurch gekennzeichnet, dass** der Kernstrang **(12, 34, 60)** mit den daran angeformten Borstenelementen bzw. Lamellenabschnitt in Achsenlängsrichtung verdreht wird, so dass schraubenförmig verlaufende Borsten- **(20, 21, 22**) bzw. Lamellenabschnittanordnungen entstehen.

4. Verfahren nach einem der Ansprüche 1 bis 3, **dadurch gekennzeichnet, dass** zwei Kernstränge **(88, 89)** mit mindestens je einer angeformten Borsten- bzw. Lamellenabschnittanordnung **(82, 83, 84, 85)** hergestellt werden und dass die beiden Kernstränge **(88, 89)** miteinander verdrillt werden.

5. Verfahren nach einem der Anspruch 1 bis 4, **dadurch gekennzeichnet, dass** an dem mindestens einen Kernstrang **(88, 89)** genau zwei Lamellen **(82, 83, 84, 85)** gebildet bzw. zwei Borstenreihen **(32, 33)** erzeugt werden.

6. Verfahren nach einem der Ansprüche 3 bis 5, **dadurch gekennzeichnet, dass** der mindestens eine Kernstrang **(12, 34, 60)** mit mindestens einer eingebetteten Seele aus Kunststoff oder Metall **(10, 11)** extrudiert wird und dass die mindestens eine Seele zum Verdrehen bzw. Verdrillen des Kernstrangs **(12, 34, 60)** verwendet wird.

7. Verfahren nach einem der Ansprüche 2 bis 6, **dadurch gekennzeichnet, dass** das intermittierende Extrudieren durch sich öffnende und schliessende Düsenverschlusselemente (**91, 92, 93, 94**) der Lamellenextrusionsöffnungen (**50; 95, 96, 97, 98**) erfolgt.

8. Verfahren nach einem der Ansprüche 1, 3, 4, 5 oder 6, **dadurch gekennzeichnet, dass** die Lamellen **(82, 83, 84, 85)** durch Walzenmesser **(48.11, 48.21, 49.11, 49.21)** oder Rotormesser in Borstenelemente zerteilt werden.

9. Vorrichtung zur Durchführung des Verfahrens nach Anspruch 1, mit einer Strangextrusionsvorrichtung (40) zum Extrudieren eines Kernstrangs **(12, 34, 60)** mit mindestens einer angeformten Lamelle und mit einer Vorrichtung **(48.1, 48.2, 49.1, 49.2)** zum Durchtrennen der Lamelle **(82, 83, 84, 85)** in vorgegebenen Intervallen.

10. Vorrichtung zur Durchführung des Verfahrens nach Anspruch 2, mit einer Strangextrusionsvorrichtung zum Extrudieren eines Kernstrangs **(12, 34, 60)** mit mindestens einem angeformten Lamellenabschnitt oder Borste, wobei eine Verschlussvorrichtung zum intermittierenden Extrudieren ausgangsseitig der Strangextrusionsvorrichtung **(40)** vorgesehen ist.

11. Reinigungsgeräts mit mindestens einem Kernstrang und mit von diesem abstehenden Reinigungselementen, insbesondere Interdentalbürste **(2), dadurch gekennzeichnet, dass** es mindestens einen strangextrudierten Kernstrang **(12, 34, 60)** mit daran einstückig angeformten Borsten **(20, 21, 22)** bzw. Lamellen aufweist.

12. Reinigungsgeräts nach Anspruch 11, **dadurch gekennzeichnet, dass** der mindestens eine Kernstrang **(12, 34, 60)** mit den einstückig angeformten Borsten **(20, 21, 22)** bzw. Lamellen in Längsrichtung des Kernstrangs **(12, 34, 60)** verdreht bzw. verdrillt ist.
